# EUROPEAN PATENT APPLICATION

(11) **EP 4 576 377 A1**
(43) Date of publication of application: **25.06.2025**
(21) Application number: 23907570.8
(22) Date of filing: 13.12.2023
(51) Int. Cl.: H01M 50/342, H01M 50/204

(54) **BATTERY PACK AND VEHICLE COMPRISING SAME**

(30) Priority: 22.12.2022 KR 20220181863; 08.12.2023 KR 20230177850
(71) Applicant: LG Energy Solution, Ltd., Seoul 07335 (KR)
(72) Inventor: BAEK, Seung-Ryul, Daejeon 34122 (KR); KIM, Sang-Jin, Daejeon 34122 (KR); KIM, Ji-Hun, Daejeon 34122 (KR); SEOL, Jae-Jung, Daejeon 34122 (KR); YOON, Seog-Jin, Daejeon 34122 (KR)
(74) Representative: Plasseraud IP
(86) International application number: PCT/KR2023/020571
(87) International publication number: WO 2024/136284

(57) **Abstract**

Disclosed are a battery pack and a vehicle including the same.

A battery pack according to an embodiment of the present disclosure may include: a plurality of battery cells; a pack case configured to store the plurality of battery cells and having a venting portion formed thereon; and a sealing member installed to the pack case to seal the pack case and configured to close the venting portion, wherein the sealing member may break by a pressure in a predetermined range so that flame or gas generated inside the pack case may be discharged through the venting portion.

## Description

### TECHNICAL FIELD

The present application claims priority to Korean Patent Application No. 10-2022-0181863 filed on December 22, 2022 and Korean Patent Application No. 10-2023-0177850 filed on December 08, 2023 in the Republic of Korea, the disclosures of which are incorporated herein by reference.

The present disclosure relates to a battery pack and a vehicle including the same, and more specifically, it relates to a battery pack capable of directional venting of flame or gas and a vehicle including the same.

### BACKGROUND ART

In general, secondary batteries refer to batteries capable of being repeatedly charged and discharged, such as lithium-ion batteries, lithium-polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series, parallel, or a combination thereof and reconnecting these battery modules in series, parallel, or a combination thereof, has been widely used.

Although lithium secondary batteries are currently in the spotlight due to their advantages such as high operation voltage and significantly high energy density, since lithium secondary batteries use organic electrolytes, overcharging of lithium secondary batteries may cause overcurrent and overheating, which may lead to explosion or fire in worse cases. That is, if a thermal event occurs inside the secondary battery, the internal pressure may rapidly increase to cause explosion or fire.

If flame occurs in at least one of the battery cells inside a case provided in the battery pack, and if the flame spreads out of the case, the user may have a dangerous situation.

For example, if flame occurs in the battery cell in the state in which the battery pack is installed to an electric vehicle and if the flame spreads to the outside, the driver of the electric vehicle may be burned or put in a dangerous situation.

Therefore, directional venting for controlling the discharge direction of high-temperature gas or flame generated from each battery cell in a predetermined direction is becoming important.

However, it is not easy to adjust the position of a venting portion through which high-temperature gas or flame is discharged in directional venting to the position desired by the designer, and provision of a separate venting device causes an increase in cost.

### DISCLOSURE

### Technical Problem

The present disclosure has been designed to solve the problems of the related art, and therefore the present disclosure is directed to providing a battery pack capable of discharging flame or gas generated from ignition in a battery cell in a predetermined direction (directional venting) without a separate venting device, and a vehicle including the same.

In addition, the present disclosure provides a battery pack capable of freely adjusting the discharge position of the flame or gas, and a vehicle including the same.

In addition, the present disclosure provides a battery pack capable of adjusting the sizes and number of venting portions through which flame or gas is discharged, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: a plurality of battery cells; a pack case configured to store the plurality of battery cells and having a venting portion formed thereon; and a sealing member installed to the pack case to seal the pack case and configured to close the venting portion, wherein the sealing member breaks by a pressure in a predetermined range so that flame or gas generated inside the pack case is discharged through the venting portion.

In an embodiment, the venting portion may be provided as a recess formed to be recessed on the pack case, and the sealing member may be disposed across the recess.

In an embodiment, the sealing member may cross the recess to divide the recess into an outer side and an inner side, and the outer side of the recess and the inner side of the recess may have different areas.

In an embodiment, the area of the inner side of the recess may be greater than the area of the outer side of the recess.

In an embodiment, the inner side of the recess may lead to a portion where flame or gas is expected to be generated, and the outer side of the recess may be open to the outside.

In an embodiment, the recess may be formed in a rectangular shape, and the sealing member may be disposed perpendicular to some edges of the recess.

In an embodiment, an insertion groove into which the sealing member is inserted may be formed on the pack case, and the insertion groove and the recess may communicate with each other.

In an embodiment, the insertion groove may be formed along the inner perimeter of the pack case, and the recess may be formed on at least one of the portions where the insertion groove is formed so as to communicate with the insertion groove.

In an embodiment, an easy-breaking portion may be formed on the sealing member to facilitate breakage when the flame or gas is generated.

In an embodiment, the easy-breaking portion may be provided as a notched portion formed to be thinner than other portions of the sealing member.

In an embodiment, the notched portion may be disposed inside the venting portion.

In an embodiment, the sealing member may be made of ethylene propylene diene monomer (EPDM).

Meanwhile, there may be provided a vehicle including the battery pack described above.

### Advantageous Effects

Embodiments of the present disclosure have the effect of discharging flame or gas generated from ignition in a battery cell in a predetermined direction (directional venting) without a separate venting device.

In addition, embodiments of the present disclosure have the effect of freely adjusting the discharge position of the flame or gas.

In addition, embodiments of the present disclosure have the effect of adjusting the sizes and number of venting portions through which flame or gas is discharged.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is a diagram viewed in the direction of arrow B in FIG. 1.
FIG. 3 is a partially exploded perspective view of FIG. 1.
FIG. 4 is a diagram illustrating a sealing member installed to the pack case in FIG. 3.
FIG. 5 is an enlarged view of portion C in FIG. 4.
FIG. 6 is a diagram illustrating the state where the sealing member is broken in FIG. 5.
FIG. 7 is a cross-sectional view taken along line A-A' in FIG. 1.
FIG. 8 is a diagram illustrating a vehicle including a battery pack according to respective embodiments of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The expression "an element is 'coupled' or 'connected' to another element" should be understood that the elements may be directly coupled or connected to each other and that the elements may also be indirectly coupled or connected to each other through a connection member.

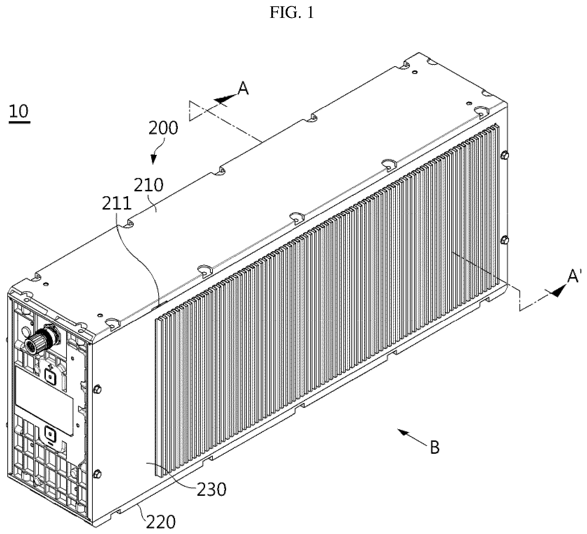

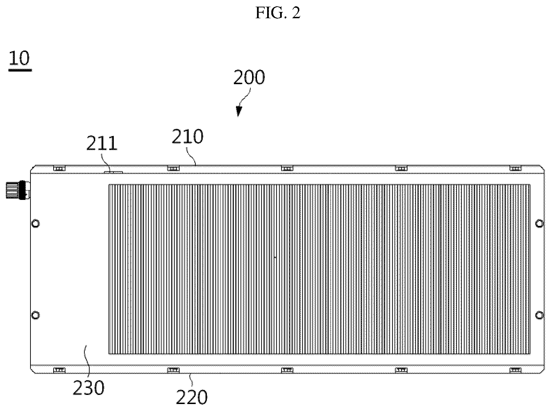

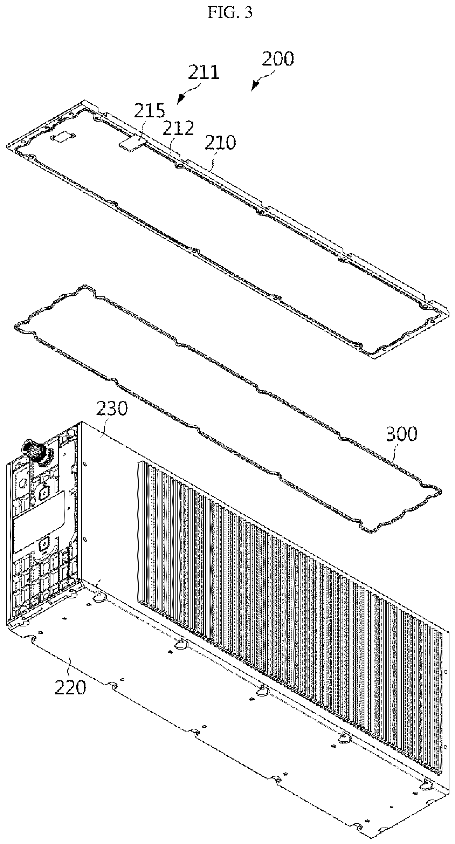

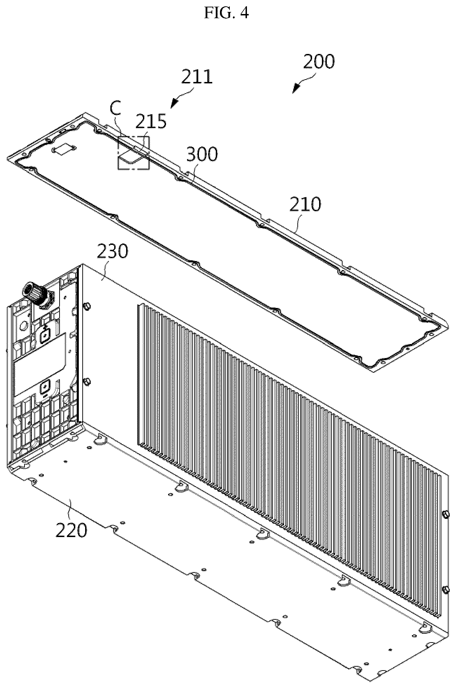

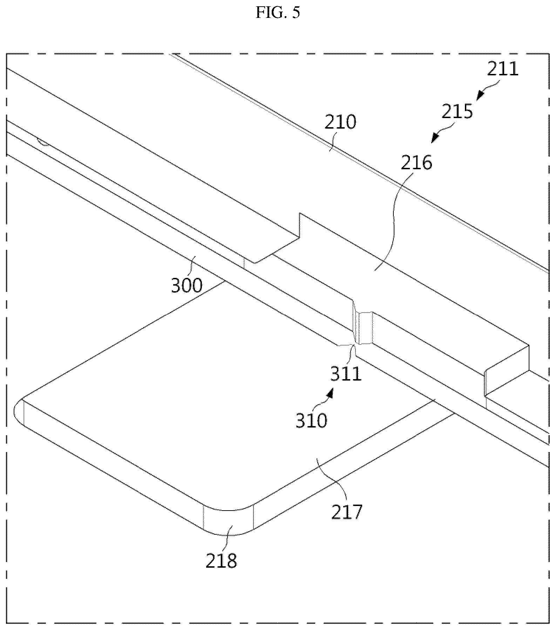

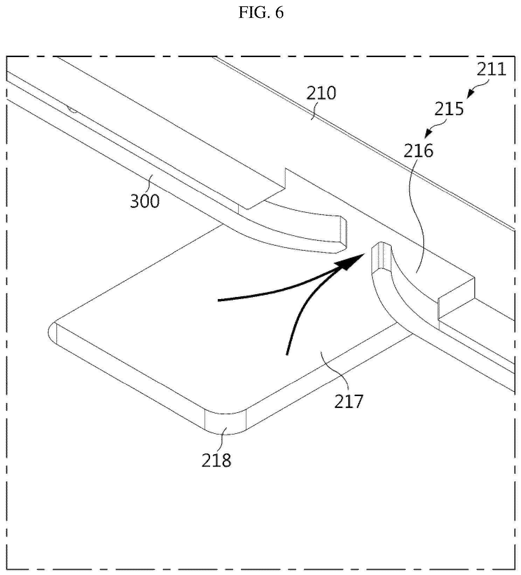

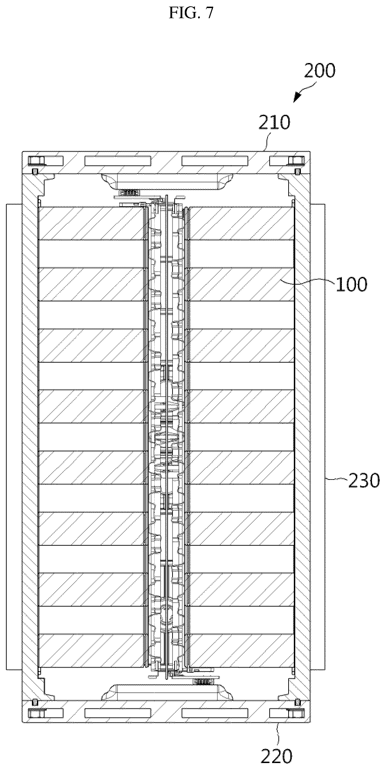

FIG. 1 is a perspective view of a battery pack according to an embodiment of the present disclosure, FIG. 2 is a diagram viewed in the direction of arrow B in FIG. 1, FIG. 3 is a partially exploded perspective view of FIG. 1, FIG. 4 is a diagram illustrating a sealing member installed to the pack case in FIG. 3, FIG. 5 is an enlarged view of portion C in FIG. 4, FIG. 6 is a diagram illustrating the state where the sealing member is broken in FIG. 5, and FIG. 7 is a cross-sectional view taken along line A-A' in FIG. 1.

Referring to the drawings, a battery pack 10 according to an embodiment of the present disclosure may include a plurality of battery cells 100, a pack case 200, and a sealing member 300.

The battery cell 100 may be configured in various ways, and may include, for example, a cylindrical battery cell, a prismatic battery cell, or a pouch-type battery cell. However, for convenience of explanation, the following description will be made based on the case where cylindrical battery cells are stored inside the pack case 200 as shown in FIG. 7. However, the battery cell 100 is not limited to the cylindrical battery cell. In addition, referring to FIG. 7, a plurality of cylindrical battery cells is stored inside the pack case 200.

The cylindrical battery cell may include an electrode assembly, a battery can, and a cap plate.

The electrode assembly has a structure in which a positive electrode plate, a negative electrode plate, and a separator interposed between the positive electrode plate and the negative electrode plate are wound in one direction. In addition, the electrode assembly may be formed in a jelly-roll type with a center hole formed at the center thereof.

For example, the electrode assembly may be manufactured by winding a laminate formed by stacking, at least once, a negative electrode plate, a separator, a positive electrode plate, and a separator in sequence. Here, the positive electrode plate and negative electrode plate may be configured in the form of a sheet.

That is, the electrode assembly applied to the present embodiment may be a wound-type electrode assembly. In this case, an additional separator may be provided on the outer circumferential surface of the electrode assembly to insulate the same from the battery can. That is, the electrode assembly may have a winding structure well known in the related art without limitations.

A positive electrode active material may be applied to one or both sides of the positive electrode plate, and a first non-coated portion may be formed at the end of the positive electrode plate to which no positive electrode active material is applied. The first non-coated portion may be exposed to the outside of the separator while forming a plurality of turns around the center of the electrode assembly, thereby functioning as an electrode tab. However, the first non-coated portion may not be formed on the positive electrode plate.

A negative electrode active material may be applied to one or both sides of the negative electrode plate, and a second non-coated portion may be formed at the end of the negative electrode plate to which no negative electrode active material is applied. The second non-coated portion may be exposed to the outside of the separator while forming a plurality of turns around the center of the electrode assembly, thereby functioning as an electrode tab. However, the second non-coated portion may not be formed on the negative electrode plate.

Here, in the case where each of the positive electrode plate and the negative electrode plate includes a non-coated portion, the first non-coated portion and the second non-coated portion may be configured to face in opposite directions.

In addition, any active material known in the art may be used as the positive electrode active material coated on the positive electrode plate and the negative electrode active material coated on the negative electrode plate without limitations.

The separator may be configured as a porous polymer film made of polyolefin polymers such as ethylene homopolymer, propylene homopolymer, ethylene/butene copolymer, ethylene/hexene copolymer, ethylene/methacrylate copolymer, or the like, or configured by laminating the porous polymer films above.

As another example, the separator may be configured as conventional porous nonwoven fabric such as high-melting point glass fiber, polyethylene terephthalate fiber, or the like

At least one surface of the separator may include a coating layer of inorganic particles. In addition, the separator itself may also be configured as a coating layer of inorganic particles. The particles constituting the coating layer may have a structure in which the particles are combined with a binder to have an interstitial volume between adjacent particles.

In addition, the center hole of the electrode assembly is also used for welding a cell terminal (positive electrode terminal) and a positive electrode collector. That is, the cell terminal and the positive electrode collector may be welded by radiating a laser beam through the center hole of the electrode assembly.

The electrode assembly is stored in the battery can. In addition, the battery can may have a through-hole formed therein. Here, the battery can may be formed in a cylindrical shape, and the electrode assembly may be stored inside the battery can such that the battery can is electrically connected to the negative electrode plate of the electrode assembly. Accordingly, the battery can may have the same polarity, that is, the negative electrode, as the negative electrode plate.

The diameter of the battery can is configured to be greater than the diameter of the electrode assembly. The battery can and the positive electrode collector may have a predetermined gap therebetween, and an insulator may be provided in the gap.

If the size of the electrode assembly is increased in the state where the size of the battery can is fixed according to the standard, the total capacity of the battery cell 100 increases, but the gap between the battery can and the electrode assembly is reduced.

That is, if the size of the electrode assembly is increased to increase the overall capacity of the battery cell 100, the gap between the battery can and the electrode assembly is reduced. Therefore, in order to increase the capacity of the battery cell 100, the reduced gap between the battery can and the electrode assembly must be able to receive the insulator, and to this end, it is desirable that the insulator be as thin as possible.

The battery can may be a substantially cylindrical container and made of a conductive material such as metal. Although the battery can may be made of conductive metal, such as aluminum, steel, stainless steel, or the like, it is not limited thereto.

The positive electrode collector is electrically connected to the positive electrode plate, for example, at the top of the electrode assembly. For example, the positive electrode collector may be made of a conductive metal material and electrically connected to the first non-coated portion of the positive electrode plate.

The cell terminal is made of a conductive metal material and electrically connected to the positive electrode collector. In addition, the cell terminal is electrically connected to the positive electrode plate of the electrode assembly through the positive electrode collector, thereby providing positive polarity.

That is, the cell terminal may function as a positive electrode terminal. In addition, the battery can may be electrically connected to the negative electrode plate of the electrode assembly as described above, and thus may have negative polarity.

The negative electrode collector is electrically connected to the negative electrode plate, for example, at the bottom of the electrode assembly. For example, the negative electrode collector may be made of a conductive metal material such as aluminum, steel, copper, nickel, or the like and electrically connected to the second non-coated portion of the negative electrode plate.

The negative electrode collector may be electrically connected to the battery can. To this end, at least a portion of the edge of the negative electrode collector may be interposed between the inner surface of the battery can and a sealing gasket and fixed thereto.

In an embodiment, at least a portion of the edge of the negative electrode collector may be fixed to a beading portion formed at the bottom of the battery can by welding while being supported on the bottom surface of the beading portion.

In addition, at least a portion of the remaining portion of the negative electrode collector, excluding the coupling portion of the beading portion, may be coupled to the curved surface of the second non-coated portion through welding, for example, laser welding.

In addition, at least a portion of the edge of the negative electrode collector may be electrically coupled to one of the upper surface and lower surface of the beading portion, which is adjacent to the crimping portion.

The cap plate is configured to seal the opening formed at the bottom of the battery can. The cap plate may be made of, for example, a metal material to ensure rigidity.

In addition, the cap plate may be separated from the electrode assembly to not have polarity. That is, the cap plate may not have polarity even if it is made of a conductive metal material.

The fact that the cap plate does not have polarity indicates that the cap plate is electrically insulated from the battery can and the cell terminal. As described above, the cap plate does not need to have polarity and is not necessarily made of a conductive metal.

The cap plate may be seated and supported on the beading portion formed on the battery can. In addition, the cap plate is fixed to a crimping portion described later. A sealing gasket may be interposed between the cap plate and the crimping portion of the battery can, thereby ensuring airtightness of the battery can. That is, the sealing gasket may be interposed between the edge of the cap plate and the opening of the battery can.

Referring to FIG. 7, a plurality of battery cells 100 (e.g., cylindrical battery cells) are stored in the pack case 200. In addition, referring to FIG. 3, a venting portion 211 is formed on the pack case 200. The pack case 200 encloses the plurality of battery cells 100, thereby protecting the battery cells 100 from external vibration or impact.

The pack case 200 may include, for example, an upper case 210, a lower case 220, and a side case 230. In addition, the venting portion 211 may be formed at various positions of the pack case 200, for example, at least one of the upper case 210, lower case 220, and side case 230. Here, the position of the venting portion 211 may vary depending on the discharge direction of flame or gas. Referring to FIGS. 1 and 3, the venting portion 211 may be formed on the upper case 210 to be directed to the lateral face. However, this is only an example.

An insertion groove 212 (see FIG. 3) into which the sealing member 300 is inserted may be formed on the pack case 200, for example, on the upper case 210. In addition, as shown in FIG. 4, the sealing member 300 is inserted into the insertion groove 212.

The pack case 200 may be manufactured, for example, by bending a metal plate, so the pack case 200 may be manufactured as an integrated piece. In the case where the pack case 200 is manufactured as an integrated piece, there is the effect of simplifying the coupling process. Alternatively, the pack case 200 may be provided as separate pieces and then coupled to each other by welding or the like. However, the material of the pack case 200 is not limited to metal.

The sealing member 300 is installed to the pack case 200 to prevent dust or moisture outside the pack case 200 from entering the pack case 200. Referring to FIGS. 4 and 5, the sealing member 300 is installed in the upper case 210 of the pack case 200 to seal the pack case 200, and closes the venting portion 211.

For example, if a thermal event occurs inside the battery pack 10 and if the internal pressure of the battery pack 10 increases rapidly and reaches a predetermined pressure (the pressure sufficient to break the sealing member 300), the sealing member 300 is broken by the pressure as shown in FIG. 6. In addition, when the sealing member 300 is broken, the closed venting portion 211 opens so that the flame or gas generated inside the pack case 200 flows to the outside of the pack case 200 through the open venting portion 211.

The venting portion 211 may be formed in various ways. For example, referring to FIGS. 3 and 5, the venting portion 211 may be provided as a recess 215 formed to be recessed in the upper case 210 of the pack case 200. Although one recess 215 is formed in the upper case 210 in FIG. 3, the number of recesses 215 may vary. In addition, the position of the recess 215 may be changed in various ways. That is, the positions and number of recesses 215 may be determined according to the designer's intention, providing the effect of enabling directional venting without a separate venting device.

In addition, the sealing member 300 may be disposed across the recess 215 (see FIG. 5). As a result, the sealing member 300 may close the recess 215, which is the venting portion 211.

The recess 215 may be formed in various shapes. For example, as shown in FIGS. 4 and 5, the recess 215 may be formed in a rectangular shape. In this case, the recess 215 may have a round portion 218 formed therein. However, the recess 215 is not limited to the above shape, and may be formed in a polygonal or circular shape, or in other deformable shapes.

In addition, referring to FIG. 5, the sealing member 300 may be disposed perpendicular to some edges of the recess 215, but is not limited thereto.

Referring back to FIG. 5, the sealing member 300 may cross the recess 215 to divide the recess 215 into an outer side 216 and an inner side 217 such that the outer side 216 of the recess 215 and the inner side 217 of the recess 215 have different areas. For example, the area of the inner side 217 of the recess 215 may be greater than the area of the outer side 216 of the recess 215. Here, the inner side 217 of the recess 215 may lead to the portion where flame or gas is expected to be generated, and the outer side 216 of the recess 215 may be configured to be open to the outside (see FIGS. 1 and 2).

That is, if flame or gas is generated in the portion where gas is expected to be generated inside the pack case 200, it moves to the inner side 217 of the recess 215. At this time, as described above, the sealing member 300 is broken by the pressure inside the battery cell 100 as shown in FIG. 6, and the flame or gas moving to the inner side 217 of the recess 215 moves to the outer side 216 through the broken portion of the sealing member 300 (see the arrow in FIG. 6) and is discharged to the outside of the pack case 200.

According to this, the flame or gas generated by ignition in the battery cell 100 may be discharged in a predetermined direction (the venting portion 211) (directional venting) as intended by the designer, instead of being discharged in a random direction unexpected by the designer.

That is, the battery pack 10 according to an embodiment of the present disclosure has the effect of freely adjusting the discharge position of flame or gas and freely determining the sizes and number of the venting portions 211 through which the flame or gas is discharged.

Meanwhile, directional venting is enabled only by employing the sealing member 300 necessary to prevent dust or moisture outside the pack case 200 from entering the pack case 200 and the venting portion 211 formed as the recess 215 on the pack case 200 without adding a separate venting device in order to implement the directional venting, thereby reducing cost and enabling easy and convenient manufacturing.

The sealing member 300 may be inserted into the insertion groove 212 (see FIG. 3) formed on the upper case 210 of the pack case 200. Here, the insertion groove 212 and the recess 215 communicate with each other. For example, the insertion groove 212 may be formed along the inner perimeter of the pack case 200, and the recess 215 may be formed on at least one of the portions where the insertion groove 212 is formed so as to communicate with the insertion groove 212. That is, if a plurality of recesses 215 is formed, the insertion groove 212 may communicate with the plurality of recesses 215 at various positions.

Referring to FIGS. 4 and 5, the sealing member 300 is inserted into and supported by the insertion groove 212. However, since the insertion groove 212 is not formed in the area where the recess 215 is formed, the sealing member 300 cannot be supported in the area where the recess 215 is formed. According to this, if the internal pressure of the battery pack 10 increases in a thermal event situation, the unsupported portion of the sealing member 300 may easily break.

Meanwhile, referring to FIG. 5, an easy-breaking portion 310 may be formed in the sealing member 300 to facilitate breakage when flame or gas is generated. That is, if the internal pressure of the battery pack 10 increases due to a thermal event, the easy-breaking portion 310 breaks.

Here, the easy-breaking portion 310 may be configured in various ways. For example, the easy-breaking portion 310 may be provided as a notched portion 311 that is thinner than other portions of the sealing member 300. Here, as shown in FIG. 5, the notched portion 311 may be disposed inside the venting portion 211.

Alternatively, the easy-breaking portion 310 may be configured as a cut portion (not shown) formed by pre-cutting the sealing member 300.

Meanwhile, although the sealing member 300 may be made of various materials such as ethylene propylene diene monomer (EPDM), the material is not limited thereto.

Meanwhile, the battery pack 10 may include various types of battery cells 100, for example, cylindrical battery cells 100, prismatic battery cells 100, or pouch-type battery cells 100. In addition, the battery pack 10 may further include various devices for controlling charging and discharging of the battery cell 100 provided in the battery pack 10, such as a BMS, a current sensor, a fuse, and the like.

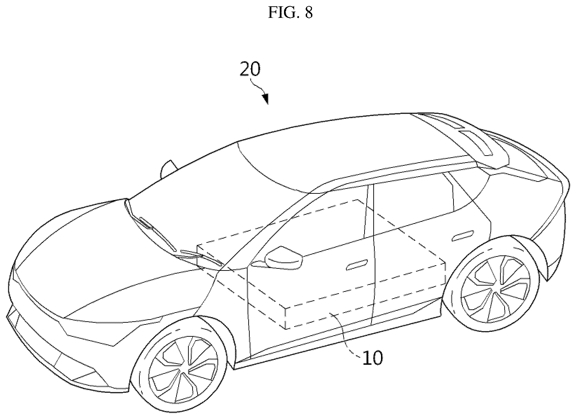

FIG. 8 is a diagram illustrating a vehicle including a battery pack according to respective embodiments of the present disclosure.

Referring to FIG. 8, a vehicle 20 according to an embodiment of the present disclosure may include one or more battery packs 10 according to the respective embodiments of the present disclosure described above.

Here, the vehicle 20 includes various vehicles designed to use electricity, such as an electric vehicle or a hybrid vehicle.

Meanwhile, although terms indicating directions such as upward, downward, left, and right are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the embodiments described above should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### Industrial applicability

The present disclosure relates to a battery pack and a vehicle including the same, and is especially available to industries related to secondary batteries.

## Claims

1. A battery pack comprising:
a plurality of battery cells;
a pack case configured to store the plurality of battery cells and having a venting portion formed thereon; and
a sealing member installed to the pack case to seal the pack case and configured to close the venting portion,
wherein the sealing member breaks by a pressure in a predetermined range so that flame or gas generated inside the pack case is discharged through the venting portion.

2. The battery pack according to claim 1,
wherein the venting portion is provided as a recess formed to be recessed on the pack case, and
wherein the sealing member is disposed across the recess.

3. The battery pack according to claim 2,
wherein the sealing member crosses the recess to divide the recess into an outer side and an inner side, and
wherein the outer side of the recess and the inner side of the recess have different areas.

4. The battery pack according to claim 3,
wherein the area of the inner side of the recess is greater than the area of the outer side of the recess.

5. The battery pack according to claim 4,
wherein the inner side of the recess leads to a portion where flame or gas is expected to be generated, and
wherein the outer side of the recess is open to the outside.

6. The battery pack according to claim 2,
wherein the recess is formed in a rectangular shape, and
wherein the sealing member is disposed perpendicular to some edges of the recess.

7. The battery pack according to claim 2,
wherein an insertion groove into which the sealing member is inserted is formed on the pack case, and
wherein the insertion groove and the recess communicate with each other.

8. The battery pack according to claim 7,
wherein the insertion groove is formed along the inner perimeter of the pack case, and
wherein the recess is formed on at least one of the portions where the insertion groove is formed so as to communicate with the insertion groove.

9. The battery pack according to claim 1,
wherein an easy-breaking portion is formed on the sealing member to facilitate breakage when the flame or gas is generated.

10. The battery pack according to claim 9,
wherein the easy-breaking portion is provided as a notched portion formed to be thinner than other portions of the sealing member.

11. The battery pack according to claim 10,
wherein the notched portion is disposed inside the venting portion.

12. The battery pack according to claim 1,
wherein the sealing member is made of ethylene propylene diene monomer (EPDM).

13. A vehicle comprising the battery pack according to any one of claims 1 to 12.
